(19) Europäisches Patentamt
European Patent Office
Office européen des brevets

(11) **EP 4 386 585 A1**

(12) **EUROPEAN PATENT APPLICATION**
published in accordance with Art. 153(4) EPC

(43) Date of publication:
**19.06.2024 Bulletin 2024/25**

(21) Application number: **22860266.0**

(22) Date of filing: **11.08.2022**

(51) International Patent Classification (IPC):
**G06F 18/00** $^{(2023.01)}$

(52) Cooperative Patent Classification (CPC):
**G06F 18/214; G06N 3/0464; G06N 20/00**

(86) International application number:
**PCT/CN2022/111734**

(87) International publication number:
**WO 2023/024920 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.08.2021 CN 202110977567**

(71) Applicant: **Huawei Cloud Computing Technologies Co., Ltd.**
**Guizhou 550025 (CN)**

(72) Inventors:
• **TONG, Bei**
  **Guizhou 550025 (CN)**
• **YU, Xiaoyuan**
  **Guizhou 550025 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **MODEL TRAINING METHOD AND SYSTEM, CLUSTER, AND MEDIUM**

(57) An artificial intelligence (AI) model training method is provided, including: determining a to-be-trained first model and a to-be-trained second model (S502), where the first model and the second model are two heterogeneous AI models; inputting training data into the first model and the second model, to obtain a first output obtained by performing inference on the training data by the first model and a second output obtained by performing inference on the training data by the second model (S504); and iteratively updating a model parameter of the first model by using the second output as a supervision signal of the first model and with reference to the first output, until the first model meets a first preset condition (S506). In this method, the first model is trained by using the output obtained by performing inference on the training data by the second model complementary to the first model as the supervision signal, so that the first model accelerates convergence and does not need to be pre-trained on a large-scale data set, to shorten training time and improve training efficiency.

FIG. 6

EP 4 386 585 A1

**Description**

This application claims priority to Chinese Patent Application No. 202110977567.4, filed with the China National Intellectual Property Administration on August 24, 2021 and entitled "MODEL TRAINING METHOD, SYSTEM, CLUSTER, AND MEDIUM", which is incorporated herein by reference in its entirety.

**TECHNICAL FIELD**

This application relates to the field of artificial intelligence (artificial intelligence, AI) technologies, and in particular, to a model training method, a model training system, a computing device cluster, a computer-readable storage medium, and a computer program product.

**BACKGROUND**

With the continuous development of AI technologies, many new AI models emerge. An AI model is an algorithm model developed and trained by using AI technologies such as machine learning to implement specific AI tasks, which are completed by using functions of the AI model. The AI tasks may include natural language processing (natural language processing, NLP) tasks such as language translation and intelligent Q&A, or computer vision (computer vision, CV) tasks such as target detection and image classification.

The new AI models are usually proposed by experts in the AI field for specific AI tasks, and these AI models have achieved desirable results for the foregoing specific AI tasks. Therefore, many researchers try to introduce these new AI models into other AI tasks. A transformer (transformer) model is used as an example. The transformer model is a deep learning model that weights all parts of input data based on an attention mechanism. The transformer model has achieved remarkable results in many NLP tasks, and many researchers try to introduce the transformer model into CV tasks, such as image classification tasks and target detection tasks.

However, when the AI model (for example, the transformer model) is introduced into a new AI task, the AI model usually needs to be pre-trained on a large-scale data set first. Consequently, the entire training process is time-consuming. For example, it may take thousands of days to train some AI models, and this cannot meet a service requirement.

**SUMMARY**

This application provides an AI model training method. In this method, a first model is trained by using an output, obtained by performing inference on training data by a second model complementary to the first model, as a supervision signal, so that the first model accelerates convergence and does not need to be pre-trained on a large-scale data set, to shorten training time and improve training efficiency. This application further provides a model training system, a computing device cluster, a computer-readable storage medium, and a computer program product corresponding to the foregoing method.

According to a first aspect, this application provides an AI model training method. The method may be performed by a model training system. The model training system may be a software system configured to train an AI model. A computing device or a computing device cluster performs the AI model training method by running program code of the software system. The model training system may alternatively be a hardware system configured to train an AI model. The following uses an example in which the model training system is a software system for description.

Specifically, the model training system determines a to-be-trained first model and a to-be-trained second model, where the first model and the second model are two heterogeneous AI models, then inputs training data into the first model and the second model, to obtain a first output obtained by performing inference on the training data by the first model and a second output obtained by performing inference on the training data by the second model, and iteratively update a model parameter of the first model by using the second output as a supervision signal of the first model and with reference to the first output, until the first model meets a first preset condition.

In the method, the model training system adds an additional supervision signal to training of the first model by using the second output obtained by performing inference on the training data by the second model that is complementary to the first model in performance, and promotes the first model to learn from the second model complementary to the first model, so that the first model can accelerate convergence, and does not need to be pre-trained on a large-scale data set, to greatly shorten training time, improve training efficiency of the first model, and meet a service requirement.

In some possible implementations, the model training system may alternatively iteratively update a model parameter of the second model by using the first output as a supervision signal of the second model and with reference to the second output, until the second model meets a second preset condition.

In this way, the model training system adds an additional supervision signal to training of the second model by using the first output obtained by performing inference on the training data by the first model that is complementary to the second model in performance, and promotes the second model to learn from the first model complementary to the second model, so that the second model can accelerate convergence, and does not need to be pre-trained on a large-scale data set, to greatly shorten training time, improve training efficiency of the second model, and meet a service requirement.

In some possible implementations, the first output includes at least one of a first feature extracted by the first model from the training data and a first probability distribution inferred based on the first feature, and the second output includes at least one of a second feature extracted by the second model from the training data and a second probability distribution inferred based on the second feature.

That the model training system iteratively updates a model parameter of the first model by using the second output as a supervision signal of the first model and with reference to the first output may be implemented in the following manner: determining a first contrastive loss based on the first feature and the second feature, and/or determining a first relative entropy loss based on the first probability distribution and the second probability distribution; and iteratively updating the model parameter of the first model based on at least one of the first contrastive loss and the first relative entropy loss.

Gradient backflow is performed based on the foregoing contrastive loss and/or relative entropy loss, so that the model training system can enable the AI model to learn how to distinguish different categories, and in addition can enable the AI model to improve a generalization capability of the AI model with reference to a probability estimation (or referred to as a probability distribution) of another AI model.

In some possible implementations, when iteratively updating the model parameter of the first model, the model training system may first iteratively update the model parameter of the first model based on a gradient of the first contrastive loss and a gradient of the first relative entropy loss. When a difference between a supervised loss of the first model and a supervised loss of the second model is less than a first preset threshold, the model training system stops iteratively updating the model parameter of the first model based on the gradient of the first contrastive loss.

In this method, the model training system limits the gradient backflow, for example, limits a gradient of the contrastive loss to flow back to the first model, to avoid that a model with poor performance misleads a model with good performance and that the model converges in an incorrect direction, so as to promote efficient convergence of the first model.

In some possible implementations, when iteratively updating the model parameter of the second model, the model training system may first iteratively update the model parameter of the second model based on a gradient of a second contrastive loss and a gradient of a second relative entropy loss. When a difference between the supervised loss of the second model and the supervised loss of the first model is less than a second preset threshold, the model training system stops iteratively updating the model parameter of the second model based on the gradient of the second relative entropy loss.

The model training system limits the gradient backflow, for example, limits a gradient of the relative entropy loss to flow back to the second model, to avoid that a model with poor performance misleads a model with good performance and that the model converges in an incorrect direction, so as to promote efficient convergence of the second model.

In some possible implementations, because of a difference in model structures, upper limits of a learning speed, data utilization efficiency, and a representation capability of a branch that trains the first model may be different from that of a branch that trains the second model. The model training system may adjust a training policy, to implement that in different phases of training, a branch with a good training effect (such as fast convergence and high precision) acts as a teacher (to be specific, a role that provides a supervision signal) to promote a branch with a poor training effect to learn. When the training effects are similar, the two branches can be partners and learn from each other. As the training progresses, roles of the branches can be interchanged. To be specific, two heterogeneous AI models can independently select corresponding roles in a training process to achieve an objective of mutual promotion, to improve training efficiency.

In some possible implementations, the first model is a transformer model, and the second model is a convolutional neural network model. Performance of the transformer model and performance of the convolutional neural network model are complementary. Therefore, the model training system may train the transformer model and the convolutional neural network model in a complementary learning manner, to improve the training efficiency.

In some possible implementations, the model training system may determine the to-be-trained first model and the to-be-trained second model based on selection made by a user via a user interface, or determine the to-be-trained first model and the to-be-trained second model based on a type of an AI task set by a user.

In the method, the model training system supports adaptive determination of the to-be-trained first model and the to-be-trained second model based on the type of the AI task, to improve an automation degree of AI model training. In addition, the model training system also supports human intervention. For example, the to-be-trained first model and the to-be-trained second model are manually selected to implement interactive training.

In some possible implementations, the model training system may receive a training parameter configured by the user via the user interface, or may determine the training parameter based on the type of the AI task set by the user, the first model, and the second model. In this way, the model training system can support adaptive determination of the training parameter, to further implement a fully automatic AI model training solution. In addition, the model training system also supports configuration of the training parameter in a manual intervention manner, to meet a personalized service requirement.

In some possible implementations, the model training system may output at least one of the trained first model and the trained second model, to perform inference by using at least one of the trained first model and the trained second model. In other words, the model training system can implement joint training and detachable inference (where for example, one of the AI models is used for inference), to improve flexibility of deploying the AI model and reduce difficulty of deploying the AI model.

In some possible implementations, the training parameter includes one or more of the following: a training round, an optimizer type, a learning rate update policy, a model parameter initialization manner, and a training policy. The model training system may iteratively update the model parameter of the first model based on the foregoing training parameter, to improve the training efficiency of the first model.

According to a second aspect, this application provides a model training system. The system includes:

> an interaction unit, configured to determine a to-be-trained first model and a to-be-trained second model, where the first model and the second model are two heterogeneous AI models; and
> a training unit, configured to: input training data into the first model and the second model, to obtain a first output obtained by performing inference on the training data by the first model and a second output obtained by performing inference on the training data by the second model.

The training unit is further configured to: iteratively update a model parameter of the first model by using the second output as a supervision signal of the first model and with reference to the first output, until the first model meets a first preset condition.

In some possible implementations, the training unit is further configured to:
iteratively update a model parameter of the second model by using the first output as a supervision signal of the second model and with reference to the second output, until the second model meets a second preset condition.

In some possible implementations, the first output includes at least one of a first feature extracted by the first model from the training data and a first probability distribution inferred based on the first feature, and the second output includes at least one of a second feature extracted by the second model from the training data and a second probability distribution inferred based on the second feature.

The training unit is specifically configured to:

> determine a first contrastive loss based on the first feature and the second feature, and/or determine a first relative entropy loss based on the first probability distribution and the second probability distribution; and
> iteratively update the model parameter of the first model based on at least one of the first contrastive loss and the first relative entropy loss.

In some possible implementations, the training unit is specifically configured to:

> iteratively update the model parameter of the first model based on a gradient of the first contrastive loss and a gradient of the first relative entropy loss; and
> when a difference between a supervised loss of the first model and a supervised loss of the second model is less than a first preset threshold, stop iteratively updating the model parameter of the first model based on the gradient of the first contrastive loss.

In some possible implementations, the first model is a transformer model, and the second model is a convolutional neural network model.

In some possible implementations, the interaction unit is specifically configured to:

> determine the to-be-trained first model and the to-be-trained second model based on selection made by a user via a user interface; or
> determine the to-be-trained first model and the to-be-trained second model based on a type of an AI task set by a user.

In some possible implementations, the interaction unit is further configured to:

> receive a training parameter configured by the user via the user interface; and/or

determine the training parameter based on the type of the AI task set by the user, the first model, and the second model.

In some possible implementations, the training parameter includes one or more of the following: a training round, an optimizer type, a learning rate update policy, a model parameter initialization manner, and a training policy.

According to a third aspect, this application provides a computing device cluster, where the computing device cluster includes at least one computing device. The at least one computing device includes at least one processor and at least one memory. The processor and the memory communicate with each other. The at least one processor is configured to execute instructions stored in the at least one memory, to enable the computing device cluster to perform the method according to any one of the first aspect or the implementations of the first aspect.

According to a fourth aspect, this application provides a computer-readable storage medium, where the computer readable-storage medium stores instructions, and the instructions instructs a computing device or a computing device cluster to perform the method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the method according to any one of the first aspect or the implementations of the first aspect. Based on the implementations provided in the foregoing aspects, further combination may be performed in this application to provide more implementations.

## BRIEF DESCRIPTION OF DRAWINGS

To describe the technical method in embodiments of this application more clearly, the following briefly describes the accompanying drawings for describing the embodiments.

FIG. 1 is a diagram of a system architecture of a model training system according to an embodiment of this application;
FIG. 2 is a schematic diagram of a model selection interface according to an embodiment of this application;
FIG. 3 is a schematic diagram of a training parameter configuration interface according to an embodiment of this application;
FIG. 4 is a schematic diagram of a deployment environment of a model training system according to an embodiment of this application;
FIG. 5 is a flowchart of a model training method according to an embodiment of this application;
FIG. 6 is a schematic flowchart of a model training method according to an embodiment of this application;
FIG. 7 is a schematic diagram of a model training process according to an embodiment of this application; and
FIG. 8 is a schematic diagram of a structure of a computing device cluster according to an embodiment of this application.

## DESCRIPTION OF EMBODIMENTS

In embodiments of this application, terms "first" and "second" are merely used for the purpose of description, and shall not be understood as an indication or implication of relative importance or implicit indication of a quantity of indicated technical features. Therefore, a feature limited by "first" or "second" may explicitly or implicitly include one or more of the features.

To facilitate understanding of embodiments of this application, some terms in this application are first explained and described.

An AI task is a task completed by using functions of an AI model. AI tasks may be classified into a natural language processing (natural language processing, NLP) task, a computer vision (computer vision, CV) task, an automatic speech recognition (automatic speech recognition, ASR) task, and the like.

An AI model is an algorithm model developed and trained by using AI technologies such as machine learning to implement specific AI tasks. In embodiments of this application, the AI model is also referred to as a "model" for short. Different types of AI tasks can be completed by using corresponding AI models. For example, the NLP task such as language translation or intelligent Q&A can be completed by using a transformer model. For another example, the CV task such as image classification or target detection may be completed by using a convolutional neural network (convolutional neural network, CNN) model.

Because some AI models have achieved desirable results for specific AI tasks, many researchers try to introduce these AI models into other AI tasks. For example, the transformer model has achieved remarkable results in many NLP tasks, and many researchers try to introduce the transformer model into the CV tasks. When the transformer model is introduced into the CV task, serialization usually needs to be performed on images. An image classification task is used as an example. First, an input image is divided into blocks, a feature representation of each block is extracted to implement serialization of the input image, and then feature representations of the blocks are input to the transformer model to classify the input image.

However, a quantity of words included in a vocabulary in the NLP task is limited, and there are usually infinite possibilities for a mode of the input image in the CV task. In this case, when the transformer model is introduced into another task such as the CV task, the transformer model needs to be pre-trained on a large-scale data set, and consequently, the entire training process is time-consuming. For example, it may take thousands of days to train some AI models to be introduced to another AI task, and this cannot meet a service requirement.

In view of this, embodiments of this application provide an AI model training method. The method may be performed by a model training system. The model training system may be a software system configured to train the AI model, and the software system may be deployed in a computing device cluster. The computing device cluster performs the AI model training method in embodiments of this application by running program code of the foregoing software system. In some embodiments, the model training system may alternatively be a hardware system. When the hardware system runs, the hardware system performs the AI model training method in embodiments of this application.

Specifically, the model training system may determine a to-be-trained first model and a to-be-trained second model. The first model and the second model are two heterogeneous AI models. To be specific, the first model and the second model are AI models of different structure types. For example, one AI model may be a transformer model, and the other AI model may be a CNN model. Because performance of the two heterogeneous AI models is usually complementary, the model training system may perform joint training on the first model and the second model in a complementary learning manner.

A process in which the model training system performs joint training on the first model and the second model is as follows: inputting training data into the first model and the second model, to obtain a first output obtained by performing inference on the training data by the first model and a second output obtained by performing inference on the training data by the second model; and iteratively updating a model parameter of the first model by using the second output as a supervision signal of the first model and with reference to the first output, until the first model meets a first preset condition.

In the method, the model training system adds an additional supervision signal to the training of the first model by using the second output obtained by performing inference on the training data by the second model, and promotes the first model to learn from the second model complementary to the first model, so that the first model can accelerate convergence, and does not need to be pre-trained on a large-scale data set, to greatly shorten training time, improve training efficiency of the first model, and meet a service requirement.

To make the technical solutions of this application clearer and easier to understand, the following first describes an architecture of the model training system.

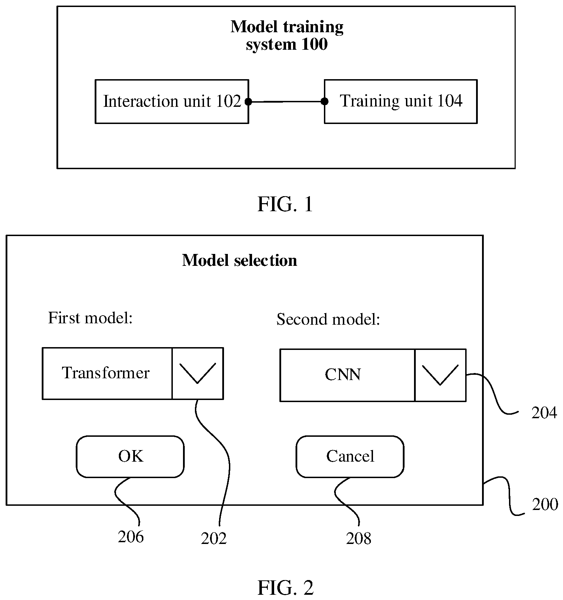

Refer to a diagram of an architecture of a model training system shown in FIG. 1. The model training system 100 includes an interaction unit 102 and a training unit 104. The interaction unit 102 may interact with a user via a browser (browser) or a client (client).

Specifically, the interaction unit 102 is configured to determine a to-be-trained first model and a to-be-trained second model, where the first model and the second model are two heterogeneous AI models. The training unit 104 is configured to: input training data into the first model and the second model, to obtain a first output obtained by performing inference by the first model and a second output obtained by performing inference on the training data by the second model, and iteratively update a model parameter of the first model by using the second output as a supervision signal of the first model and with reference to the first output, until the first model meets a first preset condition. Further, the training unit 104 is configured to iteratively update a model parameter of the second model by using the first output as a supervision signal of the second model and with reference to the second output, until the second model meets a second preset condition.

In some possible implementations, the interaction unit 102 may interact with the user via the browser or the client, to determine the to-be-trained first model and the to-be-trained second model. For example, the interaction unit 102 may determine the to-be-trained first model and the to-be-trained second model based on selection made by the user via a user interface. For another example, the interaction unit 102 may automatically determine the to-be-trained first model and the to-be-trained second model based on a type of an AI task set by the user.

An example in which the interaction unit 102 determines the to-be-trained first model and the to-be-trained second model based on the selection made by the user via the user interface is used below for description. The user interface includes a model selection interface. The model selection interface may be a graphical user interface (graphical user interface, GUI) or a command user interface (command user interface, CUI). In this embodiment, an example in which the model selection interface is the GUI is used for description. The interaction unit 102 may provide a page element of the model selection interface to the client or the browser in response to a request of the client or the browser, so that the client or the browser renders the model selection interface based on the page element.

Refer to a schematic diagram of a model selection interface shown in FIG. 2. A model selection interface 200 carries a model selection control, for example, a first model selection control 202 and a second model selection control 204. When the model selection control is triggered, a selectable model list may be presented to the user in the interface, where the selectable model list includes at least one model, and each model includes at least one instance. The user may select an instance of a model from the selectable model list as the first model and select an instance of another model from the selectable model list as the second model. In this example, the first model may be an instance of a transformer model, and the second model may be an instance of a CNN model. The model selection interface 200 further carries a confirming control 206 and a canceling control 208. The confirming control 206 is configured to confirm a model selection operation of the user, and the canceling control 208 is configured to cancel the model selection operation of the user.

The instance of the model in the selectable model list may be built in a model training system, or may be pre-uploaded by the user. In some possible implementations, the user may alternatively upload the instance of the AI model in real time, so that the interaction unit 102 determines instances of a plurality of AI models uploaded by the user as the to-be-trained first model and the to-be-trained second model. Specifically, the selectable model list may include a user-defined option. When the user selects the option, a process of uploading the instance of the AI model may be triggered, and the interaction unit 102 may determine the instance of the AI model uploaded by the user in real time as the to-be-trained first model and the to-be-trained second model.

When performing model training, the training unit 104 may perform model training based on a training parameter. The training parameter may be manually configured by the user, or may be automatically determined or adaptively adjusted by the training unit 104. The training parameter may include one or more of the following: a training round, an optimizer type, a learning rate update policy, a model parameter initialization manner, and a training policy.

The training round is a quantity of training phases or training rounds. A phase, namely, an epoch (epoch), means that each sample in a training set participates in the model training once. The optimizer is an algorithm for updating the model parameter. Based on this, an optimizer type may include different types such as gradient descent, momentum optimization, and adaptive learning rate optimization. The gradient descent may be further subdivided into batch gradient descent (batch gradient descent, BGD), stochastic gradient descent (stochastic gradient descent), or mini-batch gradient descent (mini-batch gradient descent). The momentum optimization includes standard momentum (momentum) optimization, for example, Newton accelerated gradient (Newton accelerated gradient, NAG) optimization. The adaptive learning rate optimization includes AdaGrad, RMSProp, Adam, AdaDelta, or the like.

A learning rate is a control factor of a model parameter update amplitude, and may be set to 0.01, 0.001, 0.0001, or the like. The learning rate update policy may be segment constant decay, exponential decay, cosine decay, reciprocal decay, or the like. The model parameter initialization manner includes performing model parameter initialization by using a pre-trained model. In some embodiments, the model parameter initialization manner may further include Gaussian distribution initialization and the like. The training policy is a policy used by the training model. The training policies may be classified into a single-phase training policy and a multi-phase training policy. When the optimizer type is gradient descent, the training policy may further include a gradient backflow manner in each training phase.

The following uses an example in which the user manually configures the training parameter by using the user interface for description. The user interface includes a training parameter configuration interface, and the training parameter configuration interface may be a GUI or a CUI. In this embodiment of this application, an example in which the training parameter configuration interface is a GUI is used for description.

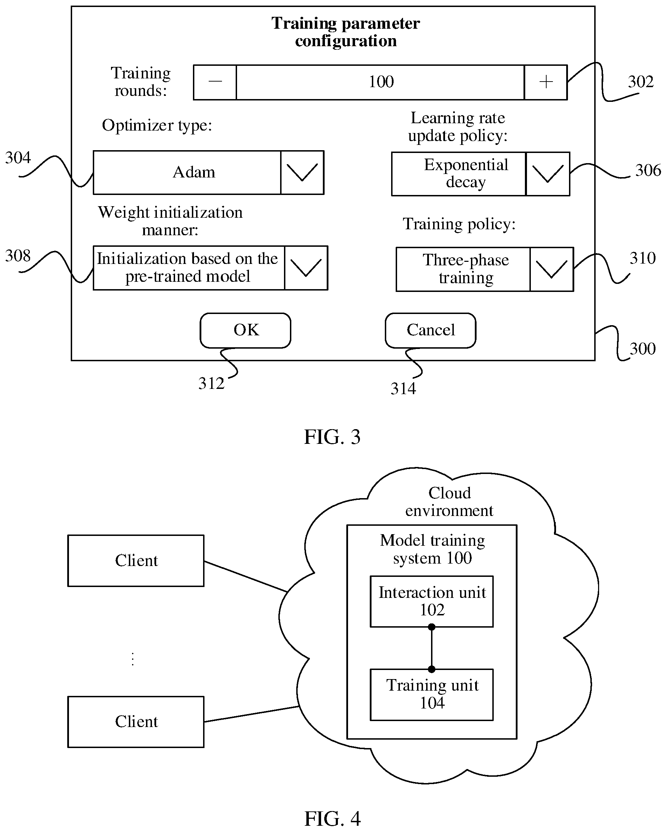

Refer to a schematic diagram of a training parameter configuration interface shown in FIG. 3. A training parameter configuration interface 300 carries a training round configuration control 302, an optimizer type configuration control 304, a learning rate update policy configuration control 306, a model initialization manner configuration control 308, and a training policy configuration control 310.

The training round configuration control 302 supports the user in configuring the training round in a manner of directly entering a numeric value or a manner of adding or subtracting a numeric value. For example, the user may directly enter a numeric value 100 by using the training round configuration control 302, to configure the training round to 100 rounds. The optimizer type configuration control 304, the learning rate update policy configuration control 306, the model parameter initialization manner configuration control 308, and the training policy configuration control 310 support the user in performing corresponding parameter configuration in a drop-down selection manner. In this example, the user can configure the optimizer type to the Adam, the learning rate update policy to the exponential decay, the model parameter initialization manner to the initialization based on the pre-trained model, and the training policy to a three-phase training policy.

The training parameter configuration interface 300 further carries a confirming control 312 and a canceling control 314. When the confirming control 312 is triggered, the browser or the client may submit the foregoing training parameters configured by the user to the model training system 100. When the canceling control 314 is triggered, the configuration of the training parameters by the user is cancelled.

It should be noted that, in FIG. 3, an example in which the user configures the training parameters for the first model and the second model in a unified manner is used for description. In some possible implementations, the user may alternatively configure the training parameters for the first model and the second model separately.

In some possible implementations, the training parameter may alternatively be automatically determined based on the type of the AI task set by the user, the first model, and the second model. Specifically, the model training system 100 may maintain a mapping relationship among the type of the AI task, the first model, and the second model. After determining the task type of the AI task, the to-be-trained first model, and the to-be-trained second model, the model training system 100 may determine the training parameter based on the foregoing mapping relationship.

FIG. 1 is merely a schematic division manner of the model training system 100. In another possible implementation of this embodiment of this application, the model training system 100 may alternatively be divided in another manner. This is not limited in this embodiment of this application.

The model training system 100 may be deployed in a plurality of manners. In some possible implementations, the model training system 100 may be centrally deployed in a cloud environment, an edge environment, or a terminal, or may be distributedly deployed in different environments of a cloud environment, an edge environment, or a terminal.

The cloud environment indicates a central computing device cluster that is owned by a cloud service provider and that is configured to provide computing, storage, and communication resources. The central computing device cluster includes one or more central computing devices, and the central computing device may be, for example, a central server. The edge environment indicates an edge computing device cluster that is geographically close to an end device (namely, an end-side device) and that is configured to provide computing, storage, and communication resources. The edge computing device cluster includes one or more edge computing devices. The edge computing device may be, for example, an edge server or a computing box. The terminal includes but is not limited to user terminals such as a desktop computer, a notebook computer, and a smartphone.

The following uses an example in which the model training system 100 is centrally deployed in a cloud environment, and provides a cloud service for training the AI model for the user for description.

Refer to a schematic diagram of a deployment environment of the model training system 100 shown in FIG. 4. As shown in FIG. 4, the model training system 100 is centrally deployed in the cloud environment, for example, deployed in a central server in the cloud environment. In this way, the model training system 100 can provide the cloud service for training the AI model, for use by the user.

Specifically, the model training system 100 deployed in the cloud environment may provide an application programming interface (application programming interface, API) of the cloud service externally. The browser or the client may invoke the API, to enter the model selection interface 200. The user may select an instance of the AI model by using the model selection interface 200, and the model training system 100 determines the to-be-trained first model and the to-be-trained second model based on the selection of the user. After the user submits the selected instance of the AI model, the browser or the client may enter the training parameter configuration interface 300. The user may configure the training parameters such as the training round, the optimizer type, the learning rate update policy, the model parameter initialization manner, and the training policy by using the controls carried on the training parameter configuration interface 300. The model training system 100 performs joint training on the first model and the second model based on the foregoing training parameters configured by the user.

Specifically, the model training system 100 in the cloud environment may input the training data into the first model and the second model, to obtain the first output obtained by performing inference on the training data by the first model and the second output obtained by performing inference on the training data by the second model, and iteratively update the model parameter of the first model by using the second output as the supervision signal of the first model and with reference to the first output, until the first model meets the first preset condition. When iteratively updating the model parameter of the first model, the model training system 100 may iteratively update the parameter of the first model by using a gradient descent method based on the configured training parameter, and update the learning rate in an exponential decay manner.

The following describes, from a perspective of the model training system 100, the AI model training method provided in embodiments of this application.

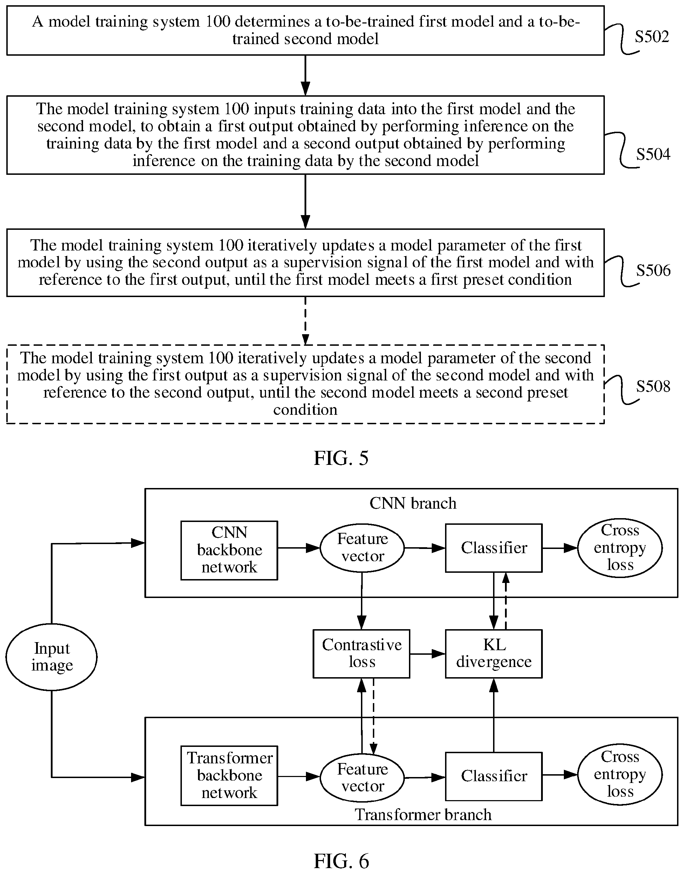

Refer to a flowchart of an AI model training method shown in FIG. 5. The method includes the following steps.

S502: A model training system 100 determines a to-be-trained first model and a to-be-trained second model.

The first model and the second model are two heterogeneous AI models. Heterogeneous means that structure types of the AI models are different. The AI model is usually formed by connecting a plurality of cells (cells). Therefore, the structure type of the AI model may be based on a structure type of the cell. When structure types of the cells are different, the structure types of the AI models formed based on the cells may be different.

In some possible implementations, performance of the two heterogeneous AI models may be complementary. The performance may be measured by using different indicators. The indicator may be, for example, precision, inference time, or the like. That the performance of the two heterogeneous AI models is complementary may be that performance of the first model in a first indicator is better than that of the second model in the first indicator, and performance of the second model in a second indicator is better than that of the first model in the second indicator. For example, inference time of an AI model with a small parameter quantity is shorter than that of an AI model with a large parameter quantity, and precision of the AI model with the large parameter quantity is higher than that of the AI model with the small parameter quantity.

Based on this, the first model and the second model may be different models in a transformer model, a CNN model, and a recurrent neural network (recurrent neural network, RNN) model. For example, the first model may be the transformer model, and the second model may be the CNN model.

The model training system 100 may determine the to-be-trained first model and the to-be-trained second model in a plurality of manners. The following separately describes different implementations.

In a first implementation, the model training system 100 determines the to-be-trained first model and the to-be-trained second model based on selection made by a user via a user interface. Specifically, the model training system 100 may return a page element in response to a request of a client or a browser, so that the client or the browser presents a model selection interface 200 to the user based on the page element. The user may select instances of the AI models of different structure types via the model selection interface 200, for example, select instances of any two models of the transformer model, the CNN model, and the recurrent neural network (recurrent neural network, RNN) model. The model training system 100 may determine the instances of the models selected by the user as the to-be-trained first model and the to-be-trained second model. In some embodiments, the model training system 100 may determine that an instance of the transformer model is the to-be-trained first model, and determine that an instance of the CNN model is the to-be-trained second model.

In a second implementation, the model training system 100 obtains a task type, and determines, based on a mapping relationship between the task type and the AI model, that models matching the task type are the to-be-trained first model and the to-be-trained second model. For example, when the task type is image classification, the model training system 100 may determine, based on the mapping relationship between the task type and the AI model, that AI models matching the image classification task includes the transformer model and the CNN model. Therefore, the instance of the transformer model and the instance of the CNN model may be determined as the to-be-trained first model and the to-be-trained second model.

There are a plurality of AI models that match the task type. The model training system 100 may determine, based on a service requirement, the to-be-trained first model and the to-be-trained second model from the plurality of AI models that match the task type. Service requirements may include a requirement for model performance, a requirement for a model size, and the like. The model performance may be represented by precision, inference time, an inference speed, and other indicators.

For example, the model training system 100 may determine, based on the requirement for the model size, a 16-layer transformer model, for example, a 16-layer vision transformer base model (vision transformer base/16, ViT-B/16) as the to-be-trained first model, and determine a 50-layer residual network model (residual network-50, ResNet-50) as the to-be-trained second model. It is clear that the model training system 100 may alternatively determine, based on selection made by the user, the ViT-B/16 as the to-be-trained first model, and determine the ResNet-50 as the to-be-trained second model. The ResNet is an example of the CNN model, and the ResNet solves a problem of gradient disappearance or gradient explosion in a deep CNN model by using a short-circuit connection.

S504: The model training system 100 inputs training data to the first model and the second model, to obtain a first output obtained by performing inference on the training data by the first model and a second output obtained by performing inference on the training data by the second model.

Specifically, the model training system 100 may obtain a training data set, then divide the training data in the training data set into several batches, for example, divide the training data into several batches based on a preset batch size (batch size), and then input the training data into the first model and the second model in batches, to obtain the first output obtained by performing inference on the training data by the first model and the second output obtained by performing inference on the training data by the second model.

The first output obtained by performing inference on the training data by the first model includes at least one of a first feature extracted by the first model from the training data and a first probability distribution inferred based on the first feature. Similarly, the second output obtained by performing inference on the training data by the second model includes at least one of a second feature extracted by the second model from the training data and a second probability distribution inferred based on the second feature.

It should be noted that the model training system 100 may alternatively not divide the training data in the training data set into batches, but input the training data in the training data set into the first model and the second model one by one, to obtain the first output obtained by performing inference on the training data by the first model and the second output obtained by performing inference on the training data by the second model. In other words, the model training system 100 may train the AI model in an offline training manner or an online training manner. This is not limited in this embodiment of this application.

S506: The model training system 100 iteratively updates a model parameter of the first model by using the second output as a supervision signal of the first model and with reference to the first output, until the first model meets a first preset condition.

In this embodiment, the second output obtained by performing inference on the training data by the second model may be used as the supervision signal of the first model, and is used to perform supervised training on the first model. A process in which the model training system 100 performs supervised training on the first model may be as follows: The model training system 100 determines a first contrastive loss based on the first feature extracted by the first model from the training data and the second feature extracted by the second model from the training data, determines a first relative entropy loss based on the first probability distribution and the second probability distribution, and iteratively updates the model parameter of the first model based on at least one of the first contrastive loss and the first relative entropy loss.

A contrastive loss mainly represents a loss generated after dimension reduction processing (for example, feature extraction) is performed on same training data by different AI models. The contrastive loss may be obtained based on the first feature obtained by performing feature extraction on the training data by the first model and the second feature obtained by performing feature extraction on the training data by the second model, for example, is obtained based on a distance between the first feature and the second feature.

In some embodiments, the model training system 100 may determine the contrastive loss of the first model and the second model by using a formula (1):

$$L_{cont} = \frac{1}{2N} \left( \sum_{i=1}^{N} lnP(z_i^1, z_i^2) + \sum_{j=1}^{N} lnP(z_j^2, z_j^1) \right) \tag{1}$$

$L_{cont}$ represents the contrastive loss, $N$ is a quantity of pieces of training data in a batch, and z represents a feature. For example, $z_i^1$ and $z_i^2$ respectively represent a first feature obtained by performing feature extraction on an $i$th piece of training data by the first model and a second feature obtained by performing feature extraction on the $i$th piece of training data by the second model. Similarly, $z_j^1$ and $z_j^2$ respectively represent a first feature obtained by performing feature extraction on a $j$th piece of training data by the first model and a second feature obtained by performing feature extraction on the $j$th piece of training data by the second model, $i$ and $j$ may be any integer from 1 to N (including two endpoints 1 and N). The feature may be represented in a form of a feature vector, a feature matrix, or the like. $P$ represents a logistic regression (softmax) probability of similarity of the features. The similarity the features may be represented by using a distance of the feature vector, for example, by using a cosine distance of the feature vector. In addition, a logistic regression probability of similarity between the first feature and the second feature is usually not equal to a logistic regression probability of similarity between the second feature and the first feature, for example, $P(z_i^1, z_i^2) \neq P(z_i^2, z_i^1)$.

It can be learned from the foregoing formula (1) that when the pieces of training data in a batch are similar, but the distance between the first feature and the second feature in feature space is large, it indicates that performance of a current model is poor, and the contrastive loss may be increased. Similarly, when the pieces of training data in a batch are completely dissimilar, but the distance between the first feature and the second feature in the feature space is small, the contrastive loss increases. By setting the foregoing contrastive loss, a penalty may be performed when an inappropriate feature is extracted, to reversely promote the AI model (for example, the first model) to extract an appropriate feature.

A relative entropy loss, also referred to as a KL divergence (Kullback-Leibler divergence, KLD), is a measure of asymmetry of different probability distributions, and mainly represents a loss generated when different models predict same training data. For the image classification task, the relative entropy loss may be a loss generated when the same training data is classified by using a classifier of the first model and a classifier of the second model. Relative entropy may be determined based on different probability distributions. The following uses a relative entropy loss in the image classification task as an example for description.

In some embodiments, the model training system 100 may determine the relative entropy loss of the first model and the second model by using a formula (2):

$$D_{KL}(P_1||P_2) = -\frac{1}{N} \sum_{i} P_1(i) ln \frac{P_2(i)}{P_1(i)} = \frac{1}{N} \sum_{i} P_1(i) ln \frac{P_1(i)}{P_2(i)} \tag{2}$$

$N$ represents the quantity of pieces of training data in a batch, $P_1(i)$ represents a probability distribution for classifying the $i$th piece of the training data by the first model, namely, the first probability distribution, and $P_2(i)$ represents a probability distribution for classifying the $i$th piece of the training data by the second model, namely, the second probability

distribution. $P_1(i)$ and $P_2(i)$ are discrete.

It can be learned from the foregoing formula (2) that, when $P_1(i) > P_2(i)$, the relative entropy loss increases, and a larger value of $P_1(i)$ indicates a larger increase amplitude of the relative entropy loss. By setting the foregoing relative entropy loss, a penalty may be performed when categories obtained by the second model through classification are inaccurate.

It should be noted that the relative entropy loss (KL divergence) is not symmetrical, and a relative entropy loss from a distribution $P_1$ to a distribution $P_2$ is usually not equal to a relative entropy loss from the distribution $P_2$ to the distribution $P_1$, that is, $D_{KL}(P_1\|P_2) \neq D_{KL}(P_2\|P_1)$.

The model training system 100 may determine the first contrastive loss based on the first feature and the second feature and with reference to the foregoing formula (1), and determine the first relative entropy loss based on the first probability distribution and the second probability distribution and with reference to the foregoing formula (2). Then, the model training system 100 may iteratively update the model parameter of the first model based on at least one of a gradient of the first contrastive loss and a gradient of the first relative entropy loss. The model parameter is a parameter that can be learned from the training data. For example, when the first model is a deep learning model, the model parameter of the first model may include a weight w and a bias b of a cell.

When iteratively updating the model parameter of the first model, the model training system 100 may iteratively update the model parameter of the first model based on a preconfigured training parameter. The training parameters include an optimizer type. The optimizer type may be different types such as gradient descent and momentum optimization. The gradient descent further includes batch gradient descent, stochastic gradient descent, or small batch gradient descent. The model training system 100 may iteratively update the model parameter of the first model based on a preconfigured optimizer type. For example, the model training system 100 may iteratively update the model parameter of the first model by using the gradient descent.

The preconfigured training parameters further include a learning rate update policy. Correspondingly, the model management system 100 may update a learning rate based on the learning rate update policy, for example, may update the learning rate based on exponential decay. When iteratively updating the model parameter of the first model, the model management system 100 may iteratively update the model parameter of the first model based on the gradient (specifically, at least one of the gradient of the first contrastive loss and the gradient of the first relative entropy loss) and an updated learning rate.

The first preset condition may be set based on the service requirement. For example, the first preset condition may be set to that the performance of the first model reaches preset performance. The performance may be measured by using indicators such as precision and inference time. For another example, the first preset condition may be set to that a loss value of the first model tends to converge, or that a loss value of the first model is less than a preset value.

The performance of the first model may be determined based on performance of the first model in a test data set. Data sets for training the AI model include the training data set, a validation data set, and the test data set. The training data set is used to learn the model parameter, for example, learn the weight of the cell in the first model. Further, the training data set may learn the bias of the cell in the first model. The validation data set is used to select a hyperparameter of the first model, for example, a quantity of model layers, a quantity of cells, and the learning rate. The test data set is used to evaluate the performance of the model. The test data set is involved neither in a process of determining the model parameter nor in a process of selecting the hyperparameter. To ensure evaluation accuracy, test data in the test data set is usually used once. Based on this, the model training system 100 may input the test data in the test data set into the first model, and evaluate the performance of the first model based on an output obtained by performing inference on the test data by the first model and a label of the test data. If the performance of the trained first model reaches the preset performance, the model training system 100 may output the trained first model; or otherwise, the model training system 100 may return to the model selection or the training parameter configuration to perform model optimization, until the performance of the trained first model reaches the preset performance.

S508: The model training system 100 iteratively updates a model parameter of the second model by using the first output as a supervision signal of the second model and with reference to the second output, until the second model meets a second preset condition.

Specifically, the model training system 100 may further perform supervised training on the second model based on the first output. The first output includes at least one of the first feature extracted by the first model from the training data and the first probability distribution inferred based on the first feature. The second output includes at least one of the second feature extracted by the second model from the training data and the second probability distribution inferred based on the second feature. The model training system 100 may determine a second contrastive loss based on the second output and the first output, and determine a second relative entropy loss based on the second probability distribution and the first probability distribution. Then, the model training system 100 may iteratively update the model parameter of the second model based on at least one of the second contrastive loss and the second relative entropy loss, until the second model meets the second preset condition.

For a manner of calculating the second contrastive loss, refer to the foregoing formula (1). For a manner of calculating the second relative entropy loss, refer to the foregoing formula (2). Details are not described herein again in this embodiment.

Further, when iteratively updating the model parameter of the second model, the model training system 100 may iteratively update the model parameter of the second model based on a preset training parameter for the second model. The training parameter may include an optimizer type, and the model training system 100 may iteratively update the parameter of the second model based on the optimizer type. For example, if the optimizer type may be the stochastic gradient descent, the model training system 100 may iteratively update the parameter of the second model in a stochastic gradient descent manner. The training parameter may further include a learning rate update policy. The model training system 100 may update a learning rate based on the learning rate update policy. Correspondingly, the model training system 100 may iteratively update the model parameter of the second model based on an updated learning rate and at least one of a gradient of the second contrastive loss and a gradient of the second relative entropy loss.

Similar to the first preset condition, the second preset condition may be set based on the service requirement. For example, the second preset condition may be set to that performance of the second model reaches preset performance. The performance may be measured by using indicators such as precision and inference time. For another example, the second preset condition may be set to that a loss value of the second model tends to converge, or that a loss value of the second model is less than a preset value.

It should be noted that S508 is an optional step, and S508 may not be performed when performing the AI model training method in this embodiment of this application.

Based on the foregoing content descriptions, this embodiment of this application provides an AI model training method. In the method, the model training system 100 adds an additional supervision signal to training of the first model by using the second output obtained by performing inference on the training data by the second module, and promotes the first model to learn from the second model complementary to the first model, so that the first model can accelerate convergence. In this way, targeted training can be implemented, and the first model does not need to be pre-trained on a large-scale data set, to greatly shorten training time, improve training efficiency of the first model, and meet the service requirement.

In addition, the model training system 100 may further add an additional supervision signal to training of the second model by using the first output obtained by performing inference on the training data by the first model, and promote the second model to learn from the first model complementary to the second model, so that the second model can accelerate convergence, and does not need to be pre-trained on a large-scale data set, to greatly shorten training time, improve training efficiency of the second model, and meet the service requirement.

As a training process proceeds, the performance of the first model and the performance of the second model may change. For example, the performance of the first model may change from performance poorer than that of the second model to performance better than that of the second model. If the model parameter of the first model is still iteratively updated based on the gradient of the first contrastive loss and the gradient of the first relative entropy loss, the second model may mislead the first model and affect the training of the first model. Based on this, the model training system 100 may alternatively iteratively update the model parameter of the first model in a gradient restricted backflow manner.

The gradient restricted backflow means performing backflow on a part of gradients to iteratively update the model parameter. For example, backflow is performed on a gradient of the contrastive loss, or a gradient of the relative entropy loss, to iteratively update the model parameter. In an actual application, the model training system 100 may iteratively update the model parameter of the first model in the gradient restricted backflow manner when the performance of the first model is significantly better than that of the second model.

The performance such as precision of the first model may alternatively be represented by a supervised loss of the first model. A supervised loss is also referred to as a cross entropy loss (cross entropy loss). The supervised loss can be calculated by using a formula (3):

$$H(p, q) = -\sum_{i=1}^{n} p(x_i)\log(q(x_i)) \tag{3}$$

$x_i$ represents the $i^{th}$ piece of the training data, and n represents the quantity of pieces of training data in a batch of training data. $p(x_i)$ represents a real probability distribution, and $q(x_i)$ represents a predicted probability distribution, for example, the first probability distribution inferred by the first model. Generally, a less supervised loss of the first model indicates that an inference result of the first model is closer to a label and that the precision of the first model is higher; and a greater supervised loss of the first model indicates that the inference result of the first model is less close to the label on a surface and that the precision of the first model is lower.

Based on this, the process in which the model training system 100 trains the first model may include the following steps.

S5062: The model training system 100 iteratively updates the model parameter of the first model based on the gradient of the first contrastive loss and the gradient of the first relative entropy loss.

Specifically, in an initial phase of the training, performance of the first model and performance of the second model are complementary, and the model training system 100 may perform backflow on both the gradient of the first contrastive loss and the gradient of the first relative entropy loss, to iteratively update the model parameter of the first model based on the gradient of the first contrastive loss and the gradient of the first relative entropy loss.

S5064: When a difference between the supervised loss of the first model and a supervised loss of the second model is less than a first preset threshold, the model training system 100 stops iteratively updating the model parameter of the first model based on the gradient of the first contrastive loss.

Specifically, the model training system 100 may separately determine the supervised loss of the first model and the supervised loss of the second model with reference to the foregoing formula (3). When the difference between the supervised loss of the first model and the supervised loss of the second model is less than the first preset threshold, it indicates that the supervised loss of the first model is significantly less than the supervised loss of the second model. Based on this, the model training system 100 may trigger the gradient restricted backflow, for example, perform backflow only on the gradient of the first relative entropy loss. The model training system 100 stops iteratively updating the model parameter of the first model based on the gradient of the first contrastive loss.

It should be noted that S5064 is described by using an example in which the model training system 100 performs backflow on the gradient of the first relative entropy loss. In another possible implementation of this embodiment of this application, the model training system 100 may also perform backflow on the gradient of the first contrastive loss, to iteratively update the model parameter of the first model based on the gradient of the first contrastive loss.

Similarly, when the model training system 100 further trains the second model by using the output of the first model as the supervision signal, the model training system 100 may only perform backflow on a part of the gradients (for example, the gradient of the second relative entropy loss) when a trigger condition of the gradient restricted backflow is met, to iteratively update the model parameter of the second model based on the part of the gradients.

By setting the foregoing loss, the model training system 100 can enable the AI model to learn how to distinguish different categories, and in addition, can enable the AI model to improve a generalization capability of the AI model with reference to a probability estimation of another AI model. In addition, through limiting gradient backflow, for example, limiting the gradient of the contrastive loss to flow back to the first model, or limiting the gradient of the relative entropy loss to flow back to the second model, it can be avoided that a model with poor performance misleads a model with good performance and that the model converges in an incorrect direction, so that efficient convergence of the first model and the second model can be promoted.

In addition, because of a difference in model structures, upper limits of a learning speed, data utilization efficiency, and a representation capability of a branch that trains the first model may be different from those of a branch that trains the second model. The model training system 100 can adjust a training policy, to implement that in different phases of training, a branch with a good training effect (such as fast convergence and high precision) acts as a teacher (to be specific, a role that provides a supervision signal) to promote a branch with a poor training effect to learn. When the training effects are similar, the two branches can be partners and learn from each other. As the training progresses, roles of the branches can be interchanged. To be specific, two heterogeneous AI models can independently select corresponding roles in the training process to achieve an objective of mutual promotion, to improve training efficiency.

The following describes the AI model training method in this embodiment of this application with reference to an instance.

Refer to a schematic flowchart of an AI model training method shown in FIG. 6. As shown in FIG. 6, a model training system 100 obtains a plurality of to-be-trained AI models, specifically, an instance of a CNN model and an instance of a transformer model. The instance of the CNN model and the instance of the transformer model are also referred to as a CNN branch (branch) and a transformer branch. Each branch includes a backbone network and a classifier. The backbone network is configured to extract a feature vector from an input image, and the classifier is configured to perform image classification based on the feature vector.

In a training phase, the CNN model and the transformer model may be a teacher model (for example, a model that provides a supervision signal) and a student model (for example, a model that performs learning based on the supervision signal) for each other. The model training system 100 may determine a contrastive loss based on a feature extracted from training data (for example, the input image) by the CNN model and a feature extracted from the training data by the transformer model. The model training system 100 may determine a relative entropy loss based on a probability distribution of types obtained by classifying the input images by the CNN model and a probability distribution of types obtained by classifying the input images by the transformer model. As shown by a dotted line pointing to the transformer branch in FIG. 6, a gradient of the contrastive loss may flow back to the transformer model, and the model training system 100 may update a model parameter of the transformer model based on the gradient of the contrastive loss. As shown by a dotted line pointing to the CNN branch in FIG. 6, a gradient of the relative entropy loss (KL divergence) may flow back to the CNN model, and the model training system 100 may update a model parameter of the CNN model based on the gradient of the relative entropy loss.

In another training phase, when a supervised loss (where usually a cross entropy loss is used) of the transformer model is far less than a supervised loss of the CNN model, the gradient of the contrastive loss may stop flowing back to the transformer model. The model training system 100 may update the model parameter of the CNN model based on the gradient of the relative entropy loss. When the supervised loss of the transformer model is much greater than the supervised loss of the CNN model, the gradient of the relative entropy loss may stop flowing back to the CNN model. The model training system 100 may update the model parameter of the transformer model based on the gradient of the contrastive loss.

It should be noted that the contrastive loss is usually dual. Therefore, the gradient of the contrastive loss may also flow back to the second model, for example, to the CNN model. In other words, the model training system 100 may update the model parameter of the CNN model based on the gradient of the contrastive loss and the gradient of the relative entropy loss.

In this embodiment of this application, performance of an AI model obtained through training by using the AI model training method in this application is further verified on a plurality of data sets. For details, refer to the following table.

**Table 1 Precision of the model on a plurality of data sets**

| Framework | ImageNet | Real | V2 | CIFAR 10 | CIFAR 100 | Flowers | Stanford Cars |
|---|---|---|---|---|---|---|---|
| ResNet-50 | 79.13 | 85.45 | 67.47 | 98.27 | 87.51 | 98.23 | 94.07 |
| Jointly trained ResNet-50 | **79.61** | **85.84** | **68.28** | **98.41** | **87.87** | **98.28** | **94.11** |
| ViT-Base | 81.65 | 86.84 | 70.85 | 99.08 | 91.36 | 98.41 | 92.50 |
| Jointly trained ViT-Base | **83.47** | **88.24** | **73.10** | **99.10** | **91.62** | **98.80** | **94.14** |

The table 1 shows precision of two models output through joint training and two independently trained models on data sets such as ImageNet, Real, V2, CIFAR 10, CIFAR 100, Flowers, and Stanford Cars in this embodiment of this application. It should be noted that the precision is precision of a first-ranked category when the model predicts a category of the input image, that is, precision of Top 1. It can be learned from the table 1 that in this embodiment of this application, in comparison with precision of an independently trained CNN model (for example, the ResNet-50 in the table 1) and precision of an independently trained transformer model (for example, the ViT-Base in the table 1), precision of a jointly trained CNN model (for example, the jointly trained ResNet-50 in the table 1) and precision of a jointly trained transformer model (for example, the jointly trained ViT-Base in the table 1) are improved, especially on the V2 data set.

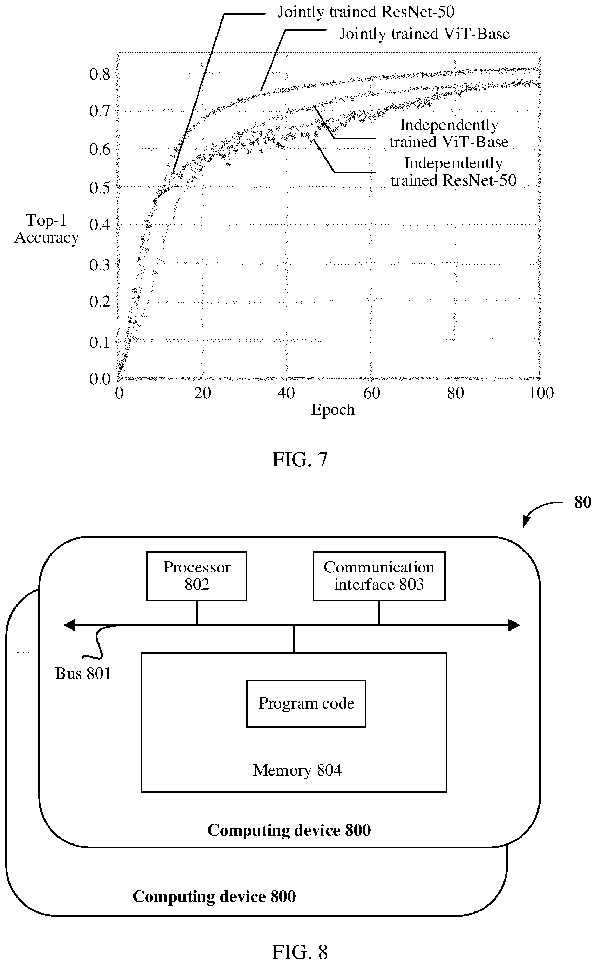

In addition, in comparison with the independently trained ResNet-50 and ViT-Base, the jointly trained ResNet-50 and ViT-Base can converge faster. Refer to a schematic diagram of a training process of each model shown in FIG. 7. The jointly trained ResNet-50 and ViT-Base usually tend to converge within 20 rounds, and the independently trained ResNet-50 and ViT-Base usually tend to converge after 20 rounds. It can be learned that heterogeneous AI models learn from each other and are jointly trained, to effectively shorten training time and improve training efficiency.

In this example, a learning target similar to that in a contrastive learning manner is added to the model training system 100, and the model training system 100 adds an additional supervision signal to training of another AI model by using a feature learned from an AI model. The AI model can update a model parameter based on the supervision signal in a targeted manner, so that convergence can be accelerated. Because of natural heterogeneity and a difference in representation capabilities of two heterogeneous AI models, common problems such as model collapse and regression in contrastive learning can be effectively prevented.

In addition, in this method, a heuristic structural operator does not need to be manually designed to promote model convergence and improve model performance, a feature of an original structure of the model is retained as much as possible, and modification of structure details is reduced, to improve elasticity and scalability of the model training system 100. This method has good universality.

The AI model training method provided in embodiments of this application is described in detail above with reference to FIG. 1 to FIG. 7. The following describes a model training system provided in an embodiment of this application with reference to the accompanying drawings.

Refer to a schematic diagram of a structure of a model training system 100 shown in FIG. 1. The system 100 includes:

> an interaction unit 102, configured to determine a to-be-trained first model and a to-be-trained second model, where the first model and the second model are two heterogeneous AI models; and

a training unit 104, configured to: input training data into the first model and the second model, to obtain a first output obtained by performing inference on the training data by the first model and a second output obtained by performing inference on the training data by the second model.

The training unit 104 is further configured to: iteratively update a model parameter of the first model by using the second output as a supervision signal of the first model and with reference to the first output, until the first model meets a first preset condition.

In some possible implementations, the training unit 104 is further configured to:

iteratively update a model parameter of the second model by using the first output as a supervision signal of the second model and with reference to the second output, until the second model meets a second preset condition.

In some possible implementations, the first output includes at least one of a first feature extracted by the first model from the training data and a first probability distribution inferred based on the first feature, and the second output includes at least one of a second feature extracted by the second model from the training data and a second probability distribution inferred based on the second feature.

The training unit 104 is specifically configured to:

determine a first contrastive loss based on the first feature and the second feature, and/or determine a first relative entropy loss based on the first probability distribution and the second probability distribution; and
iteratively update the model parameter of the first model based on at least one of the first contrastive loss and the first relative entropy loss.

In some possible implementations, the training unit 104 is specifically configured to:

iteratively update the model parameter of the first model based on a gradient of the first contrastive loss and a gradient of the first relative entropy loss; and
when a difference between a supervised loss of the first model and a supervised loss of the second model is less than a first preset threshold, stop iteratively updating the model parameter of the first model based on the gradient of the first contrastive loss.

In some possible implementations, the first model is a transformer model, and the second model is a convolutional neural network model.

In some possible implementations, the interaction unit 102 is specifically configured to:

determine the to-be-trained first model and the to-be-trained second model based on selection made by a user via a user interface; or
determine the to-be-trained first model and the to-be-trained second model based on a type of an AI task set by a user.

In some possible implementations, the interaction unit 102 is further configured to:

receive a training parameter configured by the user via the user interface; and/or
determine the training parameter based on the type of the AI task set by the user, the first model, and the second model.

In some possible implementations, the training parameter includes one or more of the following: a training round, an optimizer type, a learning rate update policy, a model parameter initialization manner, and a training policy.

In this embodiment of this application, the model training system 100 may correspondingly perform the methods described in embodiments of this application, and the foregoing and other operations and/or functions of the modules/units of the model training system 100 are separately used to implement corresponding procedures of the methods in the embodiment shown in FIG. 5. For brevity, details are not described herein again.

An embodiment of this application further provides a computing device cluster. The computing device cluster may be a computing device cluster formed by at least one computing device in a cloud environment, an edge environment, or a terminal device. The computing device cluster is specifically configured to implement a function of the model training system 100 in the embodiment shown in FIG. 1.

FIG. 8 provides a schematic diagram of a structure of a computing device cluster. As shown in FIG. 8, a computing device cluster 80 includes a plurality of computing devices 800, and the computing device 800 includes a bus 801, a processor 802, a communication interface 803, and a memory 804. The processor 802, the memory 804, and the communication interface 803 communicate with each other by using the bus 801.

The bus 801 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used in FIG. 8 for representation, but it does not indicate that there is only one bus or only one type of bus.

The processor 802 may be any one or more of a central processing unit (central processing unit, CPU), a graphics processing unit (graphics processing unit, GPU), a microprocessor (microprocessor, MP), or a digital signal processor (digital signal processor, DSP).

The communication interface 803 is configured to communicate with the outside. For example, the communication interface 803 may be configured to: receive a first model and a second model that are selected by a user via a user interface, and receive a training parameter configured by the user; or the communication interface 803 is configured to output a trained first model and/or a trained second model; or the like.

The memory 804 may include a volatile memory (volatile memory), for example, a random access memory (random access memory, RAM). The memory 804 may further include a non-volatile memory (non-volatile memory), for example, a read-only memory (read-only memory, ROM), a flash memory, a hard disk drive (hard disk drive, HDD), or a solid state drive (solid state drive, SSD).

The memory 804 stores executable code, and the processor 802 executes the executable code to perform the foregoing AI model training method.

Specifically, when the embodiment shown in FIG. 1 is implemented, and functions of parts such as the interaction unit 102 and the training unit 104 of the model training system 100 described in the embodiment in FIG. 1 are implemented by using software, software or program code needed for performing the functions in FIG. 1 may be stored in at least one memory 804 in the computing device cluster 80. The at least one processor 802 executes the program code stored in the memory 804, to enable the computing device cluster 800 to perform the foregoing AI model training method.

An embodiment of this application further provides a computer-readable storage medium. The computer-readable storage medium may be any usable medium that can be stored by a computing device, or a data storage device such as a data center that includes one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the computing device to perform the foregoing AI model training method.

An embodiment of this application further provides a computer program product. The computer program product includes one or more computer instructions. When the computer instructions are loaded and executed on a computing device, all or some of the procedures or functions according to embodiments of this application are generated. The computer instructions may be stored in a computer-readable storage medium or may be transmitted from a computer-readable storage medium to another computer-readable storage medium. For example, the computer instructions may be transmitted from a website, computing device or data center to another website, computing device or data center in a wired (for example, a coaxial cable, an optical fiber, or a digital subscriber line (DSL)) or wireless (for example, infrared, radio, or microwave) manner. The computer program product may be a software installation package. When any method of the foregoing AI model training methods needs to be used, the computer program product may be downloaded and executed on the computing device.

Descriptions of procedures or structures corresponding to the foregoing accompanying drawings have different emphasis. For a part not described in detail in a procedure or structure, refer to related descriptions of other procedures or structures.

**Claims**

1. An artificial intelligence AI model training method, wherein the method comprises:

   determining a to-be-trained first model and a to-be-trained second model, wherein the first model and the second model are two heterogeneous AI models;
   inputting training data into the first model and the second model, to obtain a first output obtained by performing inference on the training data by the first model and a second output obtained by performing inference on the training data by the second model; and
   iteratively updating a model parameter of the first model by using the second output as a supervision signal of the first model and with reference to the first output, until the first model meets a first preset condition.

2. The method according to claim 1, wherein the method further comprises:
   iteratively updating a model parameter of the second model by using the first output as a supervision signal of the second model and with reference to the second output, until the second model meets a second preset condition.

3. The method according to claim 1 or 2, wherein the first output comprises at least one of a first feature extracted by the first model from the training data and a first probability distribution inferred based on the first feature, and the second output comprises at least one of a second feature extracted by the second model from the training data and a second probability distribution inferred based on the second feature; and

the iteratively updating a model parameter of the first model by using the second output as a supervision signal of the first model and with reference to the first output comprises:

determining a first contrastive loss based on the first feature and the second feature, and/or determining a first relative entropy loss based on the first probability distribution and the second probability distribution; and

iteratively updating the model parameter of the first model based on at least one of the first contrastive loss and the first relative entropy loss.

4. The method according to claim 3, wherein the iteratively updating the model parameter of the first model based on at least one of the first contrastive loss and the first relative entropy loss comprises:

iteratively updating the model parameter of the first model based on a gradient of the first contrastive loss and a gradient of the first relative entropy loss; and

when a difference between a supervised loss of the first model and a supervised loss of the second model is less than a first preset threshold, stopping iteratively updating the model parameter of the first model based on the gradient of the first contrastive loss.

5. The method according to any one of claims 1 to 4, wherein the first model is a transformer model, and the second model is a convolutional neural network model.

6. The method according to any one of claims 1 to 5, wherein the determining a to-be-trained first model and a to-be-trained second model comprises:

determining the to-be-trained first model and the to-be-trained second model based on selection made by a user via a user interface; or

determining the to-be-trained first model and the to-be-trained second model based on a type of an AI task set by a user.

7. The method according to any one of claims 1 to 6, wherein the method further comprises:

receiving a training parameter configured by the user via the user interface; and/or

determining the training parameter based on the type of the AI task set by the user, the first model, and the second model.

8. The method according to claim 7, wherein the training parameter comprises one or more of the following: a training round, an optimizer type, a learning rate update policy, a model parameter initialization manner, and a training policy.

9. A model training system, wherein the system comprises:

an interaction unit, configured to determine a to-be-trained first model and a to-be-trained second model, wherein the first model and the second model are two heterogeneous AI models; and

a training unit, configured to: input training data into the first model and the second model, to obtain a first output obtained by performing inference on the training data by the first model and a second output obtained by performing inference on the training data by the second model, wherein

the training unit is further configured to: iteratively update a model parameter of the first model by using the second output as a supervision signal of the first model and with reference to the first output, until the first model meets a first preset condition.

10. The system according to claim 9, wherein the training unit is further configured to:

iteratively update a model parameter of the second model by using the first output as a supervision signal of the second model and with reference to the second output, until the second model meets a second preset condition.

11. The system according to claim 9 or 10, wherein the first output comprises at least one of a first feature extracted by the first model from the training data and a first probability distribution inferred based on the first feature, and the second output comprises at least one of a second feature extracted by the second model from the training data and a second probability distribution inferred based on the second feature; and
the training unit is specifically configured to:

determine a first contrastive loss based on the first feature and the second feature, and/or determine a first relative entropy loss based on the first probability distribution and the second probability distribution; and iteratively update the model parameter of the first model based on at least one of the first contrastive loss and the first relative entropy loss.

12. The system according to claim 11, wherein the training unit is specifically configured to:

iteratively update the model parameter of the first model based on a gradient of the first contrastive loss and a gradient of the first relative entropy loss; and
when a difference between a supervised loss of the first model and a supervised loss of the second model is less than a first preset threshold, stop iteratively updating the model parameter of the first model based on the gradient of the first contrastive loss.

13. The system according to any one of claims 9 to 12, wherein the first model is a transformer model, and the second model is a convolutional neural network model.

14. The system according to any one of claims 9 to 13, wherein the interaction unit is specifically configured to:

determine the to-be-trained first model and the to-be-trained second model based on selection made by a user via a user interface; or
determine the to-be-trained first model and the to-be-trained second model based on a type of an AI task set by a user.

15. The system according to any one of claims 9 to 14, wherein the interaction unit is further configured to:

receive a training parameter configured by the user via the user interface; and/or
determine the training parameter based on the type of the AI task set by the user, the first model, and the second model.

16. The system according to claim 15, wherein the training parameter comprises one or more of the following: a training round, an optimizer type, a learning rate update policy, a model parameter initialization manner, and a training policy.

17. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 8.

18. A computer-readable storage medium, comprising computer-readable instructions, wherein when the computer-readable instructions are run on a computing device or a computing device cluster, the computing device or the computing device cluster is enabled to perform the method according to any one of claims 1 to 8.

19. A computer program product, comprising computer-readable instructions, wherein when the computer-readable instructions are run on a computing device or a computing device cluster, the computing device or the computing device cluster is enabled to perform the method according to any one of claims 1 to 8.

**Model training
system 100**

| Interaction unit 102 |———●| Training unit 104 |

FIG. 1

**Model selection**

First model:                Second model:

| Transformer | ∨ |        | CNN | ∨ | 204

| OK |                    | Cancel | 200

206        202              208

FIG. 2

**Training parameter configuration**

Training rounds: | − | 100 | + | ⟩ 302

Optimizer type:

Learning rate update policy:

304 ⟩ Adam | ∨ |

Exponential decay | ∨ | ⟩ 306

Weight initialization manner:

Training policy:

308 ⟩ Initialization based on the pre-trained model | ∨ |

Three-phase training | ∨ | ⟩ 310

⟩ 300

OK

Cancel

312

314

FIG. 3

Cloud environment

Client

Model training system 100

Interaction unit 102

⋮

Training unit 104

Client

FIG. 4

A model training system 100 determines a to-be-trained first model and a to-be-trained second model ⌐ S502

The model training system 100 inputs training data into the first model and the second model, to obtain a first output obtained by performing inference on the training data by the first model and a second output obtained by performing inference on the training data by the second model ⌐ S504

The model training system 100 iteratively updates a model parameter of the first model by using the second output as a supervision signal of the first model and with reference to the first output, until the first model meets a first preset condition ⌐ S506

The model training system 100 iteratively updates a model parameter of the second model by using the first output as a supervision signal of the second model and with reference to the second output, until the second model meets a second preset condition ⌐ S508

FIG. 5

CNN branch

Input image → CNN backbone network → Feature vector → Classifier → Cross entropy loss

Contrastive loss → KL divergence

Transformer backbone network → Feature vector → Classifier → Cross entropy loss

Transformer branch

FIG. 6

Jointly trained ResNet-50

Jointly trained ViT-Base

Independently trained ViT-Base

Independently trained ResNet-50

Top-1 Accuracy

Epoch

FIG. 7

80

Processor 802

Communication interface 803

...

Bus 801

Program code

Memory 804

**Computing device 800**

**Computing device 800**

FIG. 8

## INTERNATIONAL SEARCH REPORT

| | |
|---|---|
| International application No. | |
| | **PCT/CN2022/111734** |

**A.     CLASSIFICATION OF SUBJECT MATTER**

G06K 9/62(2022.01)i

According to International Patent Classification (IPC) or to both national classification and IPC

**B.     FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNPAT, WPI, EPODOC, CNKI: 华为云计算技术有限公司, 童贝, 喻晓源, 人工智能, 模型, 训练, 第一, 第二, 异构, 互补, 监督, 预设, 条件, 推理, 收敛, 迭代, 对比损失, 相对熵损失, 梯度, model, train, predict, value, supervis+, learning, loss, iterative

**C.     DOCUMENTS CONSIDERED TO BE RELEVANT**

| Category* | Citation of document, with indication, where appropriate, of the relevant passages | Relevant to claim No. |
|---|---|---|
| X | CN 111569429 A (PARAMETRIX TECHNOLOGY (SHENZHEN) CO., LTD.) 25 August 2020 (2020-08-25) <br> description, paragraphs 0027-0147, and figures 1-7 | 1-2, 5-10, 13-19 |
| Y | CN 111569429 A (PARAMETRIX TECHNOLOGY (SHENZHEN) CO., LTD.) 25 August 2020 (2020-08-25) <br> description, paragraphs 0027-0147, and figures 1-7 | 3-4, 11-12 |
| Y | CN 112733550 A (IFLYTEK CO., LTD.) 30 April 2021 (2021-04-30) <br> description, paragraphs 0034-0185, and figures 1-10 | 3-4, 11-12 |
| A | CN 110162766 A (SHENZHEN TENCENT COMPUTER SYSTEMS CO., LTD.) 23 August 2019 (2019-08-23) <br> entire document | 1-19 |
| A | CN 111522958 A (TAIKANG INSURANCE GROUP CO., LTD. et al.) 11 August 2020 (2020-08-11) <br> entire document | 1-19 |
| A | CN 111291755 A (TENCENT TECHNOLOGY SHENZHEN CO., LTD.) 16 June 2020 (2020-06-16) <br> entire document | 1-19 |

☑ Further documents are listed in the continuation of Box C.      ☑ See patent family annex.

| | |
|---|---|
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| | |
|---|---|
| Date of the actual completion of the international search <br> **31 October 2022** | Date of mailing of the international search report <br> **08 November 2022** |
| Name and mailing address of the ISA/CN <br><br> **China National Intellectual Property Administration (ISA/CN)** <br> **No. 6, Xitucheng Road, Jimenqiao, Haidian District, Beijing 100088, China** | Authorized officer |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/111734**

### C. DOCUMENTS CONSIDERED TO BE RELEVANT

| Category* | Citation of document, with indication, where appropriate, of the relevant passages | Relevant to claim No. |
|---|---|---|
| A | CN 111967343 A (GUANGDONG UNIVERSITY OF TECHNOLOGY) 20 November 2020 (2020-11-20)<br>entire document | 1-19 |
| A | US 2017243114 A1 (INTERNATIONAL BUSINESS MACHINES CORPORATION) 24 August 2017 (2017-08-24)<br>entire document | 1-19 |

Form PCT/ISA/210 (second sheet) (January 2015)

**INTERNATIONAL SEARCH REPORT**
Information on patent family members

International application No.

**PCT/CN2022/111734**

| Patent document cited in search report | | | Publication date (day/month/year) | Patent family member(s) | | | Publication date (day/month/year) |
|---|---|---|---|---|---|---|---|
| CN | 111569429 | A | 25 August 2020 | None | | | |
| CN | 112733550 | A | 30 April 2021 | None | | | |
| CN | 110162766 | A | 23 August 2019 | WO | 2019154411 | A1 | 15 August 2019 |
| | | | | US | 2020293722 | A1 | 17 September 2020 |
| CN | 111522958 | A | 11 August 2020 | None | | | |
| CN | 111291755 | A | 16 June 2020 | US | 2022189147 | A1 | 16 June 2022 |
| | | | | WO | 2021159774 | A1 | 19 August 2021 |
| CN | 111967343 | A | 20 November 2020 | None | | | |
| US | 2017243114 | A1 | 24 August 2017 | None | | | |

Form PCT/ISA/210 (patent family annex) (January 2015)

## REFERENCES CITED IN THE DESCRIPTION

**Patent documents cited in the description**

- CN 202110977567